# EUROPÄISCHE PATENTSCHRIFT

(11) **EP 2 524 861 B1**
(45) Veröffentlichungstag und Bekanntmachung des Hinweises auf die Patenterteilung: **23.04.2014**
(21) Anmeldenummer: 11167008.9
(22) Anmeldetag: 20.05.2011
(51) Int. Cl.: B23K 37/047, B23P 21/00, B25J 9/00, B23K 37/04, B23K 11/11

(54) **Vorrichtung und Verfahren zur Handhabung eines Fahrzeugmontagewerkzeugträgers bei einer Fahrzeugfertigungslinie, Fahrzeugmontagewerkzeugträger und Montagestation**
Device and method for handling a vehicle assembly tool holder for a vehicle production line, vehicle assembly tool holder and assembly station
Dispositif et procédé de manipulation d'un support d'outil de montage de véhicule sur une ligne de fabrication de véhicule, support d'outil de montage de véhicule et station de montage

(43) Veröffentlichungstag der Anmeldung: 21.11.2012
(73) Patentinhaber: FFT EDAG Produktionssysteme GmbH & Co. KG, 36041 Fulda (DE)
(72) Erfinder: Stark, Volker, 36093, Künzell (DE); Krick, Jürgen, 36160, Dipperz (DE); Rippert, Alfred, 36041, Fulda (DE)
(74) Vertreter: Schuhbießer, Irmgard Gertrud

(56) Entgegenhaltungen:
- EP-A1- 1 759 808
- WO-A1-2004/078565
- FR-A1- 2 788 996
- US-A1- 2006 245 901
- US-B1- 6 364 817

## Beschreibung

Die Erfindung bezieht sich auf eine Vorrichtung und ein Verfahren zur Handhabung eines Fahrzeugmontagewerkzeugträgers bei einer Fahrzeugfertigungslinie und eine Montagestation der Fahrzeugfertigungslinie.

In einer Fahrzeugfertigungslinie werden Rohkarossen bzw. Fahrzeuggrundkörper in einer Linie bzw. Reihe nacheinander zu verschiedenen Stationen entlang der Fahrzeugfertigungslinie transportiert. Bei den Stationen werden zum Beispiel bei Montagestationen einzelne Teile, wie Seitenteile des Fahrzeugs, Fenster, Türen usw., des herzustellenden Fahrzeugs an den Fahrzeuggrundkörper montiert. Hierzu werden die jeweils zu montierenden Teile mit den bereits montierten Teilen des Fahrzeuggrundkörpers mittels Robotern derart verspannt, dass alle Fahrzeuge, die in der Fertigungslinie hergestellt werden, gleich sind. Zur Verspannung werden sogenannte Spannrahmen verwendet.

US 2006/245901 A1 zeigt eine Positionierung einer Spannvorrichtung, die zur Montage einer Fahrzeugkarosserie eingesetzt werden kann. Ein hierbei verwendeter Spannrahmen hat eine Tragfläche, die zum Tragen von bei einer Montage der Fahrzeugkarosserie zu verwendenden Sicherheitseinheiten usw. ausgestaltet ist.

EP 1759 808 A1 zeigt eine Spannvorrichtung, welche oberseitig mit Spannmitteln versehen ist. Die Spannvorrichtung kann mit Hilfe von zwei Hub- und Drehvorrichtungen von einem Wagen abgehoben und in eine für die Bearbeitung durch Bearbeitungsroboter passende Höhen- oder Drehlage gebracht werden.

Bei der Montage von Fahrzeugen in einer Fahrzeugfertigungslinie sollen möglichst verschiedene Typen eines Fahrzeugmodells, wie beispielsweise Kombi, Limousine, Cabrio, usw., je nach Bedarf direkt nacheinander und abwechselnd herstellbar sein. Die verschiedenen Typen des einen Fahrzeugmodells benötigen jedoch unterschiedliche Teile, wie Dächer, Hecktüren usw. Das heißt, soll erst eine Limousine, dann ein Kombi und direkt danach wieder eine Limousine des Fahrzeugmodells hergestellt werden, muss an einer Station zur Montage der Fahrzeugdächer erst ein kurzes Dach für die Limousine, dann ein längeres Dach für den Kombi und direkt danach wieder eine kurzes Dach für die Limousine montiert werden. Dies macht zum einen eine Vorhaltung von verschiedenen Dachformen sowie der hierfür benötigten Montagewerkzeuge, wie beispielsweise Spannrahmen, erforderlich. Daraus ergibt sich eine große Herausforderung in Bezug auf einen möglichst geringen Platzbedarf für die Montage sowie eine möglichst kurze Montagezeit. Die Montagezeit ist hier auch durch die Umrüstzeit mitbestimmt, die zum Umrüsten der Montagestation benötigt wird.

EP 1029 774 B1 beschreibt eine Transportvorrichtung zum Transport von Fahrzeuggrundkörpern auf einem Transportweg in einer Fertigungslinie von Kraftfahrzeugen. Neben dem Transportweg sind Fahrwege für jeweils einen auf einer Seite der Transportvorrichtung separat verfahrbaren Seitenwagen einer Spannvorrichtung für die Fahrzeuggrundkörper vorhanden. Die Seitenwagen können ausgewechselt werden, so dass in der Fertigungslinie je nach Anforderung unterschiedliche Teile an die zeitlich kurz aufeinanderfolgenden unterschiedlichen Fahrzeuggrundkörper montierbar sind.

In manchen Fertigungslinien ist diese Lösung jedoch beispielsweise aus Platzgründen nicht einsetzbar, so dass Bedarf nach einer weiteren Möglichkeit zur einfachen Umrüstung der Montagestationen in Fahrzeugfertigungslinien besteht.

Diese Aufgabe wird durch eine Vorrichtung zur Handhabung eines Fahrzeugmontagewerkzeugträgers bei einer Fahrzeugfertigungslinie nach Patentanspruch 1 gelöst. Die Vorrichtung hat eine erste Handhabungseinrichtung zur Handhabung des Fahrzeugmontagewerkzeugträgers, der mindestens zwei Tragflächen hat, die jeweils zum Tragen eines bei einer Montage eines Fahrzeugs in der Fahrzeugfertigungslinie zu verwendenden Fahrzeugmontagewerkzeugs ausgestaltet sind, und eine zweite Handhabungseinrichtung zur Handhabung des Fahrzeugmontagewerkzeugträgers gemeinsam mit der ersten Handhabungseinrichtung, wobei die erste und zweite Handhabungseinrichtung zur gemeinsamen Handhabung des Fahrzeugmontagewerkzeugträgers derart ausgestaltet sind, dass nach der Handhabung eine der mindestens zwei Tragflächen des Fahrzeugmontagewerkzeugträgers an einer vorbestimmten Position angeordnet ist, an der sich zuvor eine andere der mindestens zwei Tragflächen befand.

Vorteilhafte weitere Ausgestaltungen der Vorrichtung sind in den abhängigen Patentansprüchen angegeben.

Es ist möglich, dass die Vorrichtung zudem eine Stützeinrichtung zum Stützen des Fahrzeugmontagewerkzeugträgers derart hat, dass mindestens eine der zwei Tragflächen des Fahrzeugmontagewerkzeugträgers an der vorbestimmten Position angeordnet ist.

Es ist von Vorteil, wenn eine Handhabung des Fahrzeugmontagewerkzeugträgers mittels der ersten und zweiten Handhabungseinrichtung umfasst, dass die erste und zweite Handhabungseinrichtung den an einer vorbestimmten Montagestation angeordneten und in eine erste vorbestimmten Drehposition gedrehten Fahrzeugmontagewerkzeugträger gemeinsam um ein vorbestimmtes Maß anheben, den Fahrzeugmontagewerkzeugträger aus der ersten vorbestimmten Drehposition gemeinsam um eine Drehachse in eine zweite vorbestimmte Drehposition drehen und den Fahrzeugmontagewerkzeugträger gemeinsam um das vorbestimmte Maß absenken, um den Fahrzeugmontagewerkzeugträger, in die zweite vorbestimmte Drehposition gedreht, wieder an der vorbestimmten Montagestation anzuordnen.

Bevorzugt sind die erste und zweite Handhabungseinrichtung derart ausgestaltet, dass sie sich bei einer Handhabung des Fahrzeugmontagewerkzeugträgers die Gewichtskraft bzw. das Gewicht des Fahrzeugmontagewerkzeugträgers aufteilen.

Die erste Handhabungseinrichtung kann der zweiten Handhabungseinrichtung steuerungsmäßig übergeordnet sein.

Möglicherweise haben die erste Handhabungseinrichtung und die zweite Handhabungseinrichtung jeweils ein Handhabungseinrichtung-Adapterelement zum Zusammenwirken mit einem Fahrzeugmontagewerkzeugträger-Adapterelement des Fahrzeugmontagewerkzeugträgers.

Die erste Handhabungseinrichtung und/oder die zweite Handhabungseinrichtung können zudem derart ausgestaltet sein, dass sie zur Bearbeitung eines Fahrzeuggrundkörpers verwendbar sind, aus dem das Fahrzeug hergestellt wird.

Die zuvor genannte Aufgabe wird zudem durch eine Montagestation nach Patentanspruch 8 gelöst. Die Montagestation ist für eine Fahrzeugfertigungslinie zur Fertigung von Fahrzeugen verwendbar, und umfasst eine zuvor beschriebene Vorrichtung und mindestens einen Fahrzeugträger, der bei einer Montage eines Fahrzeugs in der Fahrzeugfertigungslinie einsetzbar ist.

Der Fahrzeugmontagewerkzeugträger kann umfassen: einen Grundrahmen mit mindestens zwei Tragflächen, die jeweils zum Tragen eines bei der Montage eines Fahrzeugs in der Fahrzeugfertigungslinie zu verwendenden Fahrzeugmontagewerkzeugs ausgestaltet sind, ein erstes Fahrzeugmontagewerkzeugträger-Adapterelement zum Zusammenwirken mit einem Handhabungseinrichtung-Adapterelement einer ersten Handhabungseinrichtung einer Vorrichtung zur Handhabung eines Fahrzeugmontagewerkzeugträgers bei einer Fahrzeugfertigungslinie, und ein zweites Fahrzeugmontagewerkzeugträger-Adapterelement zum Zusammenwirken mit einem Handhabungseinrichtung-Adapterelement einer zweiten Handhabungseinrichtung einer Vorrichtung zur Handhabung eines Fahrzeugmontagewerkzeugträgers bei einer Fahrzeugfertigungslinie, wobei das zweite Fahrzeugmontagewerkzeugträger-Adapterelement dem ersten Fahrzeugmontagewerkzeugträger-Adapterelement an dem Grundrahmen gegenüberliegt.

Es ist vorteilhaft, wenn an mindestens einer Tragfläche der mindestens zwei Tragflächen des Grundrahmens als Fahrzeugmontagewerkzeug Spannelemente angeordnet sind zum Spannen eines Fahrzeugteils, insbesondere eines Fahrzeugdachs, in einen Fahrzeuggrundkörper, um das Fahrzeugteil mit dem Fahrzeuggrundkörper zu verbinden.

Der Grundrahmen kann ein Rechteck bilden, das erste Fahrzeugmontagewerkzeugträger-Adapterelement kann an einer ersten Schmalseite des Rechtecks angeordnet sein, und das zweite Fahrzeugmontagewerkzeugträger-Adapterelement kann an einer zweiten Schmalseite des Rechtecks angeordnet sein, welche der ersten Schmalseite des Rechtecks gegenüberliegt.

Alternativ kann der Grundrahmen ein Rechteck bilden, das erste Fahrzeugmontagewerkzeugträger-Adapterelement an einer ersten Ecke des Rechtecks angeordnet sein, und das zweite Fahrzeugmontagewerkzeugträger-Adapterelement an einer zweiten Ecke des Rechtecks angeordnet sein, welche der ersten Ecke des Rechtecks diagonal gegenüberliegt.

Die Montagestation kann gegenüber zu fertigenden Fahrzeugen feststehend angeordnet sein, die mittels einer Transporteinrichtung der Fahrzeugfertigungslinie entlang der Fahrzeugfertigungslinie direkt nacheinander in einer Reihe transportiert werden.

Die zuvor genannte Aufgabe wird zudem durch ein Verfahren zum Handhaben eines Fahrzeugmontagewerkzeugträgers bei einer Fahrzeugfertigungslinie nach Patentansprüchen 14 und 15 gelöst. Das Verfahren hat den Schritt des gemeinsam Handhabens des Fahrzeugmontagewerkzeugträgers, der mindestens zwei Tragflächen hat, die jeweils zum Tragen eines bei einer Montage eines Fahrzeugs in der Fahrzeugfertigungslinie zu verwendenden Fahrzeugmontagewerkzeugs ausgestaltet sind, mittels einer ersten und zweiten Handhabungseinrichtung, wobei das gemeinsame Handhaben des Fahrzeugmontagewerkzeugträgers umfasst, dass nach der Handhabung eine der mindestens zwei Tragflächen des Fahrzeugmontagewerkzeugträgers an einer vorbestimmten Position angeordnet ist, an der sich zuvor eine andere der mindestens zwei Tragflächen befand.

Der Schritt des gemeinsam Handhabens des Fahrzeugmontagewerkzeugs mittels der ersten und zweiten Handhabungseinrichtung kann die Schritte umfassen: gemeinsam Anheben des an einer vorbestimmten Montagestation angeordneten und in eine erste vorbestimmten Drehposition gedrehten Fahrzeugmontagewerkzeugs um ein vorbestimmtes Maß mit Hilfe der ersten und zweiten Handhabungseinrichtung, gemeinsam Drehen des Fahrzeugmontagewerkzeugs aus der ersten vorbestimmten Drehposition um eine Drehachse in eine zweite vorbestimmte Drehposition, und gemeinsam Absenken des Fahrzeugmontagewerkzeugs um das vorbestimmte Maß, um das Fahrzeugmontagewerkzeug, in die zweite vorbestimmte Drehposition gedreht, wieder an der vorbestimmten Montagestation anzuordnen.

Nachfolgend ist die Erfindung unter Bezugnahme auf die beiliegende Zeichnung und anhand von Ausführungsbeispielen näher beschrieben. Es zeigen:
Fig. 1 eine perspektivische Ansicht einer Fahrzeugfertigungslinie mit einer Vorrichtung gemäß einem Ausführungsbeispiel der vorliegenden Erfindung;
Fig. 2 eine Seitenansicht der Vorrichtung gemäß dem Ausführungsbeispiel der vorliegenden Erfindung;
Fig. 3 eine weitere Seitenansicht der Vorrichtung gemäß dem Ausführungsbeispiel der vorliegenden Erfindung;
Fig. 4 eine Draufsicht auf die Vorrichtung gemäß dem Ausführungsbeispiel der vorliegenden Erfindung;
Fig. 5 eine perspektivische Ansicht der Vorrichtung von Fig. 1 in dem Zustand, in welchem ein Fahrzeugmontagewerkzeugträger angehoben ist;
Fig. 6 eine perspektivische Ansicht der Vorrichtung von Fig. 1 in dem Zustand, in welchem der Fahrzeugmontagewerkzeugträger angehoben ist und gerade gedreht wird; und
Fig. 7 eine perspektivische Ansicht der Vorrichtung von Fig. 1 in dem Zustand, in welchem der Fahrzeugmontagewerkzeugträger nach der Drehung wieder abgelegt ist.

### (Ausführungsbeispiel)

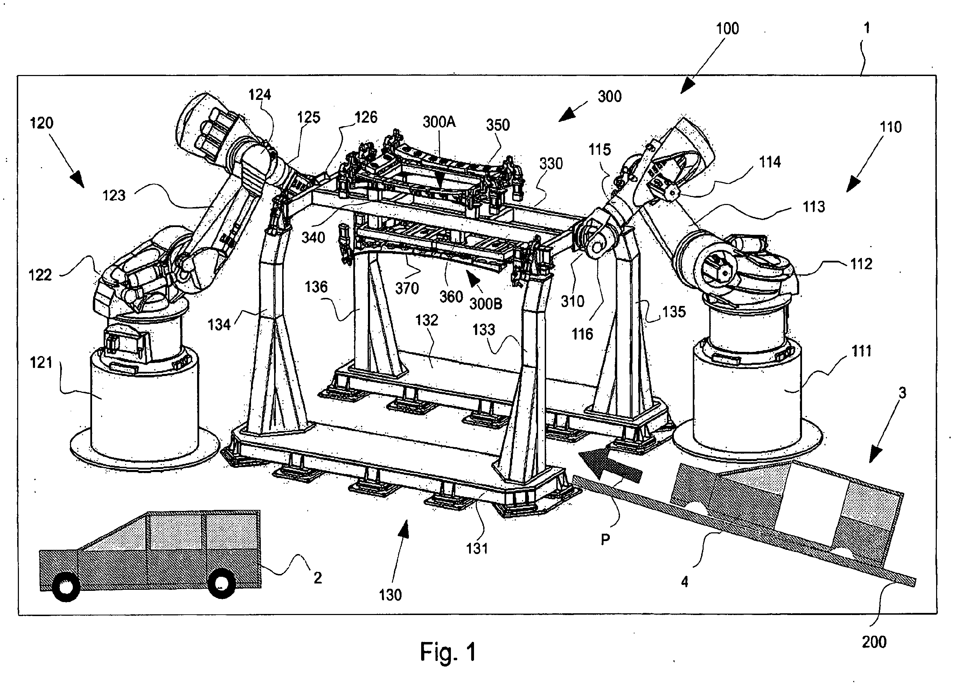

Fig. 1 zeigt eine Fahrzeugfertigungslinie 1, in welcher Fahrzeuge 2 aus Fahrzeuggrundkörpern 3 hergestellt werden bzw. zunächst die Fahrzeuggrundkörper 3 der Fahrzeuge 2 aus einzelnen Fahrzeugteilen 4, wie Seitenteilen, Türen, Dach, usw., gefertigt bzw. hergestellt werden. Hierfür hat die Fahrzeugfertigungslinie 1 mindestens eine Montagestation 100 und eine Transporteinrichtung 200 zum Transport der Fahrzeuggrundkörper 3 in Richtung des Pfeils P durch die Fahrzeugfertigungslinie 1 bzw. durch die Montagestation 100. Die Transporteinrichtung 200 ist in Fig. 1 nur teilweise angedeutet. Die Montagestation 100 hat eine erste Handhabungseinrichtung 110, eine zweite Handhabungseinrichtung 120 und eine Stützeinrichtung 130, auf der ein Fahrzeugmontagewerkzeugträger 300 aufliegt. Die erste und zweite Handhabungseinrichtung 110, 120 dienen zum gemeinsamen Handhaben des Fahrzeugmontagewerkzeugträgers 300, der in der in Fig. 1 dargestellten Montageposition durch die Stützeinrichtung 130 gestützt wird. Der Fahrzeugmontagewerkzeugträger 300 wird in der Montagestation 100 zur Montage an dem Fahrzeuggrundkörper 3 verwendet. Die erste und zweite Handhabungseinrichtung 110, 120 sind in Fig. 1 jeweils Roboter.

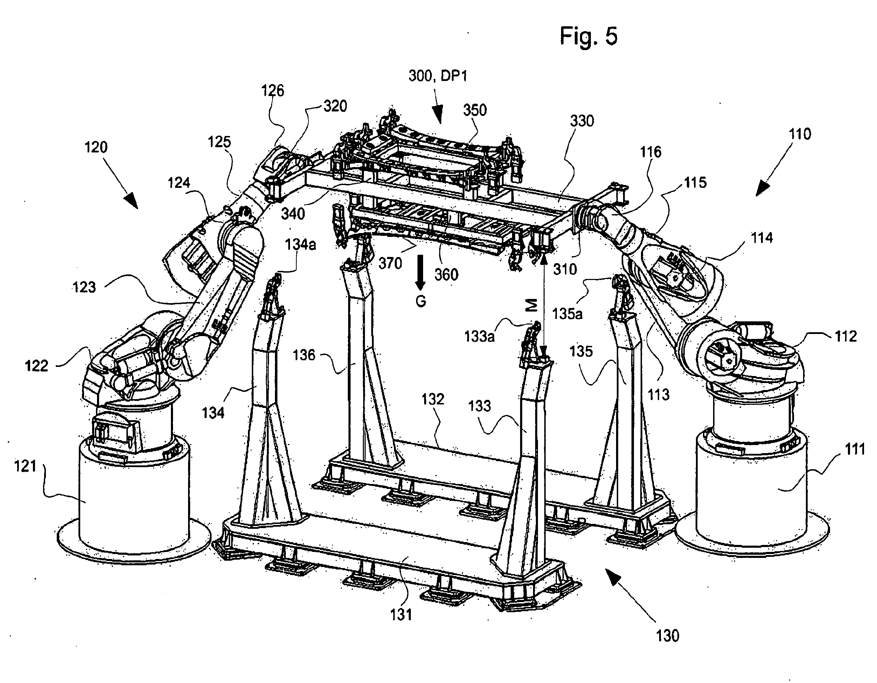

Die erste und zweite Handhabungseinrichtung 110, 120 sowie die Stützeinrichtung 130 bilden eine Vorrichtung zur Handhabung des Fahrzeugmontagewerkzeugträgers 300 bei einer Fahrzeugfertigungslinie 1. Die Handhabung des Fahrzeugmontagewerkzeugträgers 300 ist später in Bezug auf Fig. 5 bis Fig. 7 genauer beschrieben.

Wie aus Fig. 1 ebenfalls ersichtlich, hat die erste Handhabungseinrichtung 110 einen Fuß 111, an dem an einem Armgelenk 112 ein Arm 113 montiert ist. Der Arm 113 hat wiederum an seinem dem Armgelenk 112 abgewandten Ende ein Auslegergelenk 114, über welches ein Ausleger 115 mit dem Arm 113 verbunden ist. An einem Ende des Auslegers 115 ist ein Handhabungseinrichtung-Adapterelement 116 angeordnet, mit welchem die erste Handhabungseinrichtung 110 an ein Fahrzeugmontagewerkzeugträger-Adapterelement 310 des Fahrzeugmontagewerkzeugträgers 300 greift.

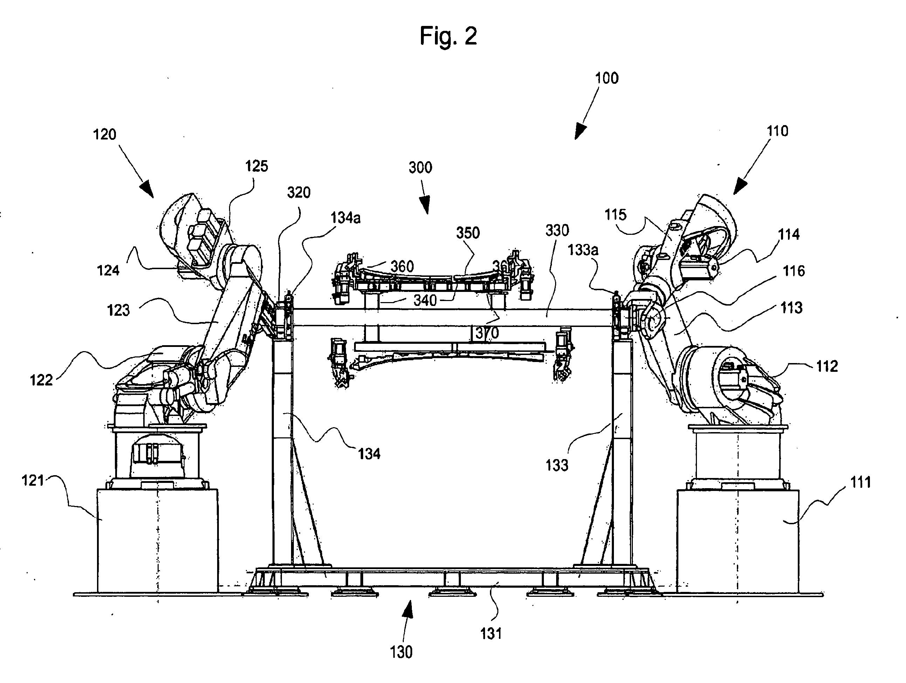

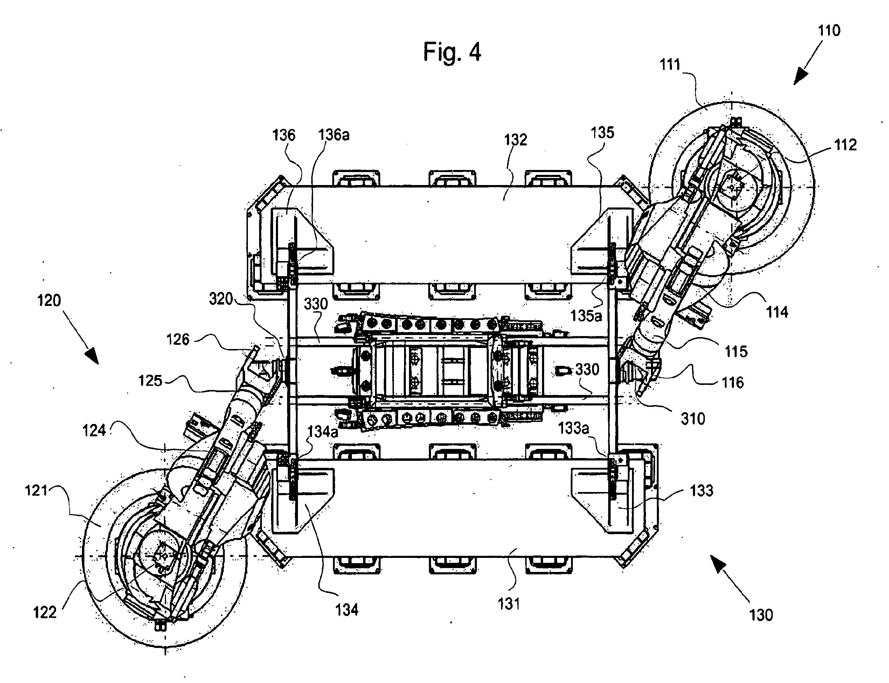

In ähnlicher Weise hat die zweite Handhabungseinrichtung 120 einen Fuß 121, an dem an einem Armgelenk 122 ein Arm 123 montiert ist. Der Arm 123 hat wiederum an seinem dem Armgelenk 122 abgewandten Ende ein Auslegergelenk 124, über welches ein Ausleger 125 mit dem Arm 123 verbunden ist. An einem Ende des Auslegers 125 ist ein Handhabungseinrichtung-Adapterelement 126 angeordnet, mit welchem die zweite Handhabungseinrichtung 120 an ein Fahrzeugmontagewerkzeugträger-Adapterelement 320 des Fahrzeugmontagewerkzeugträgers 300 greift, welches in Fig. 2 und Fig. 4 besser sichtbar ist.

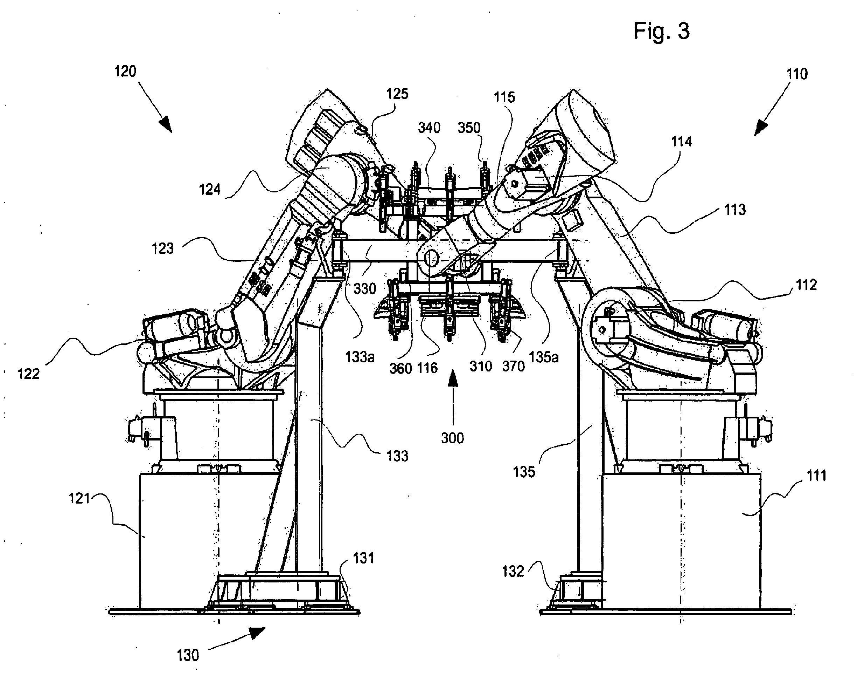

Die nachfolgende Beschreibung der Montagestation 100 ist unter Bezugnahme auf Fig. 1 bis Fig. 4 vorgenommen. Fig. 2 zeigt eine Seitenansicht der in Fig. 1 dargestellten Vorrichtung, wenn der Betrachter auf die Breitseite des Rechtecks blickt. Fig. 3 zeigt eine Seitenansicht der in Fig. 1 dargestellten Vorrichtung, wenn der Betrachter auf die Schmalseite des Rechtecks blickt. Zudem zeigt Fig. 4 eine Draufsicht auf die Montagestation 100.

Wie in Fig. 1 veranschaulicht, hat der Fahrzeugmontagewerkzeugträger 300 einen Grundrahmen 330, der länger als breit ist, also im Wesentlichen als Rechteck mit einer Breitseite und einer Schmalseite ausgebildet ist. Das erste Fahrzeugmontagewerkzeugträger-Adapterelement 310 ist an der Mitte der ersten Schmalseite des Grundrahmens 330 des Fahrzeugmontagewerkzeugträgers 300 angeordnet. Das zweite Fahrzeugmontagewerkzeugträger-Adapterelement 320 (Fig. 2, Fig. 4) ist an der Mitte der zweiten Schmalseite des Grundrahmens 330 des Fahrzeugmontagewerkzeugträgers 300 angeordnet, wie in Fig. 4 am besten erkenntlich. Zudem hat der Fahrzeugmontagewerkzeugträger 300 in Fig. 1 eine erste Tragfläche 300A, an welcher ein erster Spannrahmen 340 befestigt ist, der eine Vielzahl von Spannelementen 350 aufweist. Der Fahrzeugmontagewerkzeugträger 300 hat außerdem eine zweite Tragfläche 300B, an welcher ein zweiter Spannrahmen 360 befestigt, der eine Vielzahl von Spannelementen 370 aufweist. Der erste Spannrahmen 340 hat eine kürzere Länge als der zweite Spannrahmen 360. Daher ist auch die Anzahl von Spannelementen 350 an dem ersten Spannrahmen 340 kleiner als die Anzahl von Spannelementen 370 an dem zweiten Spannrahmen 360. Der erste und zweite Spannrahmen 340, 360 sind Fahrzeugmontagewerkzeuge.

Die Stützeinrichtung 130 hat einen ersten Grundträger 131 und einen zweiten Grundträger 132. Der erste und zweite Grundträger 131, 132 sind rechts und links neben der Transporteinrichtung 200 angeordnet. Der erste Grundträger 131 und der zweite Grundträger 132 sind gegenüber den Fahrzeuggrundkörpern 3 feststehend, die mittels der Transporteinrichtung 200 transportiert, und somit bewegt werden. An dem ersten Grundkörper 131 sind eine erste Stützsäule 133 und eine zweite Stützsäule 134 angeordnet. An dem zweiten Grundkörper 132 sind eine dritte Stützsäule 135 und eine vierte Stützsäule 136 angeordnet. Die erste und zweite Stützsäule 133, 134 ragen jeweils im Wesentlichen senkrecht aus dem auf dem Boden stehenden ersten Grundkörper 131 nach oben. Die dritte und vierte Stützsäule 135, 136 ragen jeweils im Wesentlichen senkrecht aus dem auf dem Boden stehenden zweiten Grundkörper 132 nach oben. An dem von dem ersten Grundkörper 131 abgewandten Ende 133a (Fig. 2, Fig. 3, Fig. 4) der ersten Stützsäule 133, dem von dem ersten Grundkörper 131 abgewandten Ende 134a (Fig. 2, Fig. 4) der zweiten Stützsäule 134, dem von dem zweiten Grundkörper 132 abgewandten Ende 135a (Fig. 3) der dritten Stützsäule 135, und dem von dem zweiten Grundkörper 132 abgewandten Ende 136a (Fig. 4) der vierten Stützsäule 136 liegt der Fahrzeugmontagewerkzeugträger 300 auf.

Die erste bis vierte Stützsäule 133, 134, 135, 136 laufen nach oben hin insgesamt in etwa konisch zu. Anders ausgedrückt, die dem ersten Grundkörper 131 zugewandte Enden 133a, 134a der ersten und zweiten Stützsäule 133, 134 und auch die dem zweiten Grundkörper 132 zugewandten Enden 135a, 136a der dritten und vierten Stützsäule 135, 136 sind jeweils zum jeweiligen Grundkörper 131, 132 hin verbreitert ausgeführt. Dadurch kann die Gewichtskraft der von der ersten bis vierten Stützsäule 133, 134, 135, 136 gestützten Last möglichst gut in die Grundkörper 131, 132 geleitet werden.

Wie in Fig. 1 bis Fig. 4 veranschaulicht, ist der Fahrzeugmontagewerkzeugträger 300 durch seine Form als Rechteck symmetrisch aufgebaut. Demzufolge ist auch die aus der ersten und zweiten Handhabungseinrichtung 110, 120 und der Stützeinrichtung 130 gebildete Vorrichtung symmetrisch aufgebaut. Das heißt, die erste Handhabungseinrichtung 110 und die zweite Handhabungseinrichtung 120 sind auf einer verlängerten Diagonale des Rechtecks des Fahrzeugmontagewerkzeugträgers 300 angeordnet. Und die Stützsäulen 133, 134, 135, 136 der Stützeinrichtung 130 sind derart an den Grundkörpern 131 und 132 angeordnet, dass sie an den vier Ecken des von dem Grundrahmen 330 gebildeten äußeren Rechtecks angeordnet sind. Außerdem haben die Grundkörper 131 und 132 die gleiche Höhe über dem Boden, auf dem sie stehen. Und, die Stützsäulen 133, 134, 135, 136 haben die gleiche Höhe. Dadurch kann der Fahrzeugmontagewerkzeugträger 300 auf einer horizontalen Ebene auf den Enden 133a, 134a, 135a, 136a der ersten bis vierten Stützsäule 133, 134, 135, 136 aufliegen, wie in Fig. 1 bis Fig. 3 dargestellt.

Fig. 1 bis Fig. 4 zeigen den Zustand, in welchem in der Montagestation 100 der zweite Spannrahmen 360 des Fahrzeugmontagewerkzeugträgers 300 zur Montage eines Daches an dem Fahrzeuggrundkörper 3 verwendet wird. Somit wird in dem dargestellten Zustand gerade der Fahrzeugtyp Kombi montiert. Der erste Spannrahmen 340 des Fahrzeugmontagewerkzeugträgers 300, der zur Montage eines Daches des Fahrzeugtyps Limousine geeignet ist, wird in dem Zustand von Fig. 1 bis Fig. 4 nicht verwendet. Soll nun nach Montage des Dachs für den Fahrzeuggrundkörper 3 eines Kombis (vgl. Fig. 1) die Montage eines Dachs für den Fahrzeuggrundkörper 3 einer Limousine vorgenommen werden, muss die Vorrichtung aus erster und zweiter Handhabungseinrichtung 110, 120 und Stützeinrichtung 130 die Montagestation 100 entsprechend umrüsten. Genauer gesagt, die Vorrichtung muss den ersten Spannrahmen 340 des Fahrzeugmontagewerkzeugträgers 300 in die Montageposition drehen, also wenn die Spannelemente 350 der Transporteinrichtung 200 (Fig. 1) bzw. einem darauf transportierten Fahrzeuggrundkörper 2 zugewandt ist. Dieser Vorgang wird aus Fig. 5 bis Fig. 7 sowie der nachfolgenden Beschreibung deutlicher.

In Fig. 5 ist der Zustand veranschaulicht, bei welchem die erste und zweite Handhabungseinrichtung 110, 120 den Fahrzeugmontagewerkzeugträger 300 von der Stützeinrichtung 130 um ein vorbestimmtes Maß M im Wesentlichen senkrecht angehoben haben. Dabei wird die Gewichtskraft G des Fahrzeugmontagewerkzeugträgers 300, die in Fig. 5 als nach unten zum Boden gerichteter schwarzer Blockpfeil dargestellt ist, bestenfalls je etwa zur Hälfte von der ersten und zweiten Handhabungseinrichtung 110, 120 aufgenommen. Anders ausgedrückt, die erste und zweite Handhabungseinrichtung 110, 120 teilen sich die zu tragende Last auf.

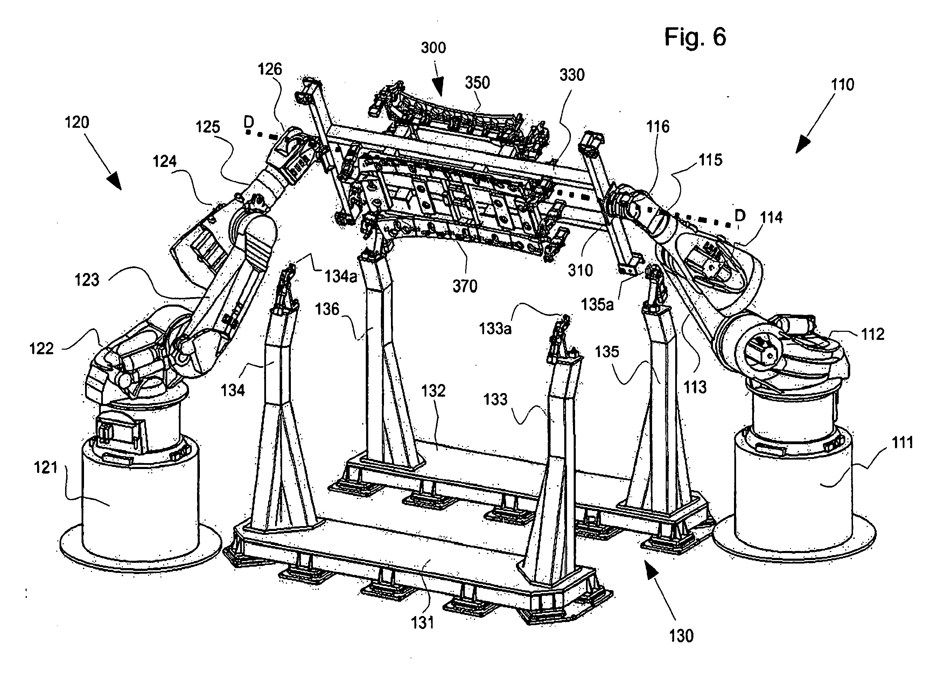

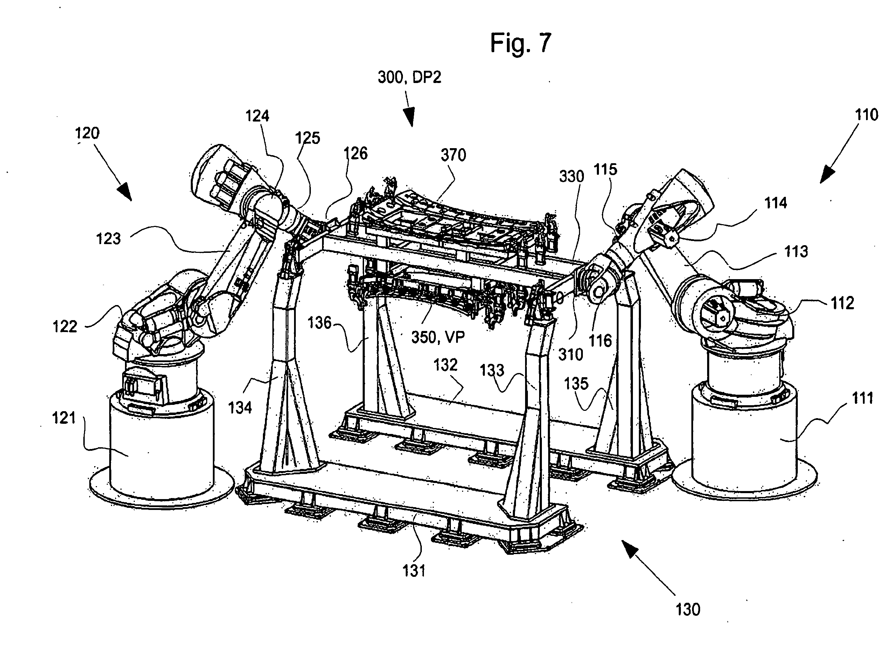

Nach dem in Fig. 5 gezeigten Zustand, drehen die erste und zweite Handhabungseinrichtung 110, 120 gemeinsam den Fahrzeugmontagewerkzeugträger 300 um eine Drehachse D, wie in Fig. 6 dargestellt. Hierbei ist es vorteilhaft, dass das erste und zweite Fahrzeugmontagewerkzeugträger-Adapterelement 310, 320 an der Mitte der ersten Schmalseite des Grundrahmens 330 des Fahrzeugmontagewerkzeugträgers 300 angeordnet ist. Dadurch fordert die Drehung des Fahrzeugmontagewerkzeugträgers 300 den geringsten Platzbedarf und somit den kleinstmöglichen Drehradius. Der Fahrzeugmontagewerkzeugträger 300 wird bei der Drehung mittels der ersten und zweiten Handhabungseinrichtung 110, 120 um 180° um die Drehachse D gedreht. Sobald die Drehung vollständig ausgeführt ist, kann der Fahrzeugmontagewerkzeugträger 300 wieder auf der Stützeinrichtung 130 abgesetzt werden, wie in Fig. 7 gezeigt. Bei dem Zustand in Fig. 7 ist nun der Spannrahmen 340 mit den Spannelementen 350 unten an dem Fahrzeugmontagewerkzeugträger 300 angeordnet, wo zuvor der Spannrahmen 360 mit den Spannelementen 370 angeordnet war. Der Spannrahmen 340 mit den Spannelementen 350 befindet sich nun an einer vorbestimmten Position VP, in welcher er zur Montage verwendet werden kann. Demgegenüber ist der Spannrahmen 360 mit den Spannelementen 370 nun oben an dem Fahrzeugmontagewerkzeugträger 300 angeordnet, wo zuvor der Spannrahmen 340 mit den Spannelementen 350 angeordnet war. Anders ausgedrückt, die erste Tragfläche 300A, an welcher der erste Spannrahmen 340 befestigt ist, ist nun dort angeordnet, wo sich zuvor die zweite Tragfläche 300B des Fahrzeugmontagewerkzeugträgers 300 befand. Somit kann nun der Spannrahmen 340 mit den Spannelementen 350 zur Montage eines Daches eines Fahrzeuggrundkörpers 3 (vgl. Fig. 1) verwendet werden. In diesem Fall kann nun also ein Dach, ein Fahrzeugteil 4, für den Fahrzeugtyp Limousine an einem nicht dargestellten Fahrzeuggrundkörper einer Limousine montiert werden. Das Dach bzw. Fahrzeugteil 4 kann an einer vorherigen Station in der Fahrzeugfertigungslinie 1 auf den Fahrzeuggrundkörper 3 aufgelegt worden sein.

Die Drehposition des Fahrzeugmontagewerkzeugträgers 300 in Fig. 1 bis Fig. 5 entspricht einer ersten vorbestimmten Drehposition DP1 (Fig. 5) des Fahrzeugmontagewerkzeugträgers 300. Die Drehposition des Fahrzeugmontagewerkzeugträgers 300 in Fig. 7 entspricht einer zweiten vorbestimmten Drehposition DP2 (Fig. 7) des Fahrzeugmontagewerkzeugträgers 300.

Der Fahrzeugmontagewerkzeugträger 300 befindet sich bei allen zuvor beschriebenen Zuständen während der Handhabung mittels der ersten und zweiten Handhabungseinrichtung 110, 120 über der Stützeinrichtung 130. Er befindet sich bei allen zuvor beschriebenen Zuständen während der Handhabung mittels der ersten und zweiten Handhabungseinrichtung außerdem über einem Fahrzeuggrundkörper 3 auf der Transporteinrichtung 200 (Fig. 1).

In dem in Fig. 1 bis Fig. 4 sowie dem in Fig. 7 gezeigten Zustand ist der Fahrzeugmontagewerkzeugträger 300 an der Stützeinrichtung 130 verriegelt. Hierzu sind bei der Stützeinrichtung 130 die Enden 133a, 134a, 135a, 136a der ersten bis vierten Stützsäule 133, 134, 135, 136 als entsprechende Verriegelungseinrichtungen 133a, 134a, 135a, 136a ausgebildet, die in Fig. 5 bis Fig. 7 gezeigt sind. Die Verriegelungseinrichtungen 133a, 134a, 135a, 136a sind zu lösen, um den Fahrzeugmontagewerkzeugträger 300 anheben und drehen zu können, wie in Fig. 5 und Fig. 6 dargestellt.

Bei der beschriebenen Handhabung des Fahrzeugmontagewerkzeugträgers 300, also seinem Anheben, Drehen und wieder Absetzen, wie beschrieben, ist die erste Handhabungseinrichtung 110 der zweiten Handhabungseinrichtung 120 steuerungsmäßig übergeordnet. Anders gesagt, die erste Handhabungseinrichtung 110 agiert als Master und die zweite Handhabungseinrichtung 120 als Slave. Das heißt, nur die erste Handhabungseinrichtung 110 erhält von einer Steuereinrichtung der Fahrzeugfertigungslinie 1 und/oder einer Erfassungseinrichtung zur Erfassung der Rahmennummer des Fahrzeuggrundkörpers 3 eine Anweisung zum Umrüsten der Montagestation 100. Bei der Handhabung des Fahrzeugmontagewerkzeugträgers 300 steuert die erste Handhabungseinrichtung 110 die Aktionen der zweiten Handhabungseinrichtung 120. Hierbei führen die erste und zweite Handhabungseinrichtung 110, 120 die gesamte Handhabung des Fahrzeugmontagewerkzeugträgers 300 zum Umrüsten der Montagestation 100 gemeinsam aus.

Mit der beschriebenen Vorrichtung kann eine Montagestation 100 mit geringem Zeit- und Platzbedarf von einer Montagevariante in eine andere Montagevariante umgerüstet werden.

### (Modifikationen des Ausführungsbeispiels)

Alle zuvor beschriebenen Ausgestaltungen der Vorrichtung, des Fahrzeugmontagewerkzeugträgers 300, der Montagestation 100 und des Verfahrens können einzeln oder in allen möglichen Kombinationen Verwendung finden. Hierbei sind insbesondere folgende Modifikationen denkbar.

In allen Figuren sind jeweils nur zwei Handhabungseinrichtungen 110, 120 dargestellt. Es können jedoch noch weitere Handhabungseinrichtungen vorhanden sein, um beispielsweise Schweißarbeiten usw. auszuführen. Es ist insbesondere auch möglich, dass die erste und/oder die zweite Handhabungseinrichtung 110, 120, wenn sie nicht zum Umrüsten der Montagestation 100 benötigt werden, wie in Fig. 5 bis Fig. 7 gezeigt, selbst Tätigkeiten, wie Schweißen, Clinchen, Rollfalzen, Toxen, Greifen, usw. ausführen. Dies ist besonders vorteilhaft, um die Anzahl von Handhabungseinrichtungen in der Fahrzeugfertigungslinie 1 so gering wie möglich zu halten. Dadurch lassen sich die notwendigen Kosten für die Fahrzeugfertigungslinie 1 und damit auch die Herstellungskosten für das einzelne Fahrzeug 2 senken.

Wenn die erste und/oder die zweite Handhabungseinrichtung 110, 120 jedoch nicht für solche Tätigkeiten, wie Schweißen, usw. gebraucht wird, können die erste und/oder die zweite Handhabungseinrichtung 110, 120 auch fest oder lösbar fest mit dem Fahrzeugmontagewerkzeugträger 300 verbunden sein.

Es ist auch möglich, dass die erste Handhabungseinrichtung 110 der zweiten Handhabungseinrichtung 120 steuerungsmäßig untergeordnet ist, so dass die zweite Handhabungseinrichtung 120 als Master und die erste Handhabungseinrichtung 110 als Slave der zweiten Handhabungseinrichtung 120 agiert.

Die erste und zweite Handhabungseinrichtung 110, 120 müssen auch nicht auf zwei gegenüberliegenden Seiten des Fahrzeugmontagewerkzeugträgers 300 angeordnet sein, wie dies in allen Figuren gezeigt ist. Das heißt, die erste und zweite Handhabungseinrichtung 110, 120 können beispielsweise auf der gleichen Seite neben der Transporteinrichtung 200 und somit den Fahrzeuggrundkörpern 3 angeordnet sein. In diesem Fall sind die erste und zweite Handhabungseinrichtung 110, 120 an der gleichen Breitseite des Rechtecks des Fahrzeugmontagewerkzeugträgers 300 angeordnet.

Es ist auch möglich, dass die erste und zweite Handhabungseinrichtung 110, 120 einen Fahrzeugmontagewerkzeugträger 300 gemeinsam anheben, von der Stützeinrichtung 130 wegbewegen, um ihn an einem anderen Ort als der Montagestation 100 wieder abzulegen. Danach können sie gemeinsam einen anderen Fahrzeugmontagewerkzeugträger 300 gemeinsam anheben, zu der Stützeinrichtung 130 der Montagestation 100 bewegen, um ihn dort wieder abzulegen.

Je nach Bedarf kann ein anderer Fahrzeugmontagewerkzeugträger 300 Verwendung finden, der andere Spannrahmen 340, 360 mit anderen Spannelementen 350, 370 aufweist. Es kann auch ein Fahrzeugmontagewerkzeugträger 300 zum Einsatz kommen, der andere Werkzeuge als Spannrahmen mit Spannelementen aufweist.

Der Fahrzeugmontagewerkzeugträger 300 kann auch mehr als zwei Seiten haben, an denen Spannrahmen 340, 360 oder andere Werkzeuge befestigt sind. Das heißt, der Fahrzeugmontagewerkzeugträger 300 kann die Form eines Trägers mit dreieckigem, viereckigen, fünfeckigen usw. Querschnitt haben. Somit hat der Fahrzeugmontagewerkzeugträger 300 mehr als zwei Tragflächen für Spannrahmen 340, 360 oder andere Werkzeuge.

Falls in der Fahrzeugsfertigungslinie 1 nur ein Fahrzeugtyp, also beispielsweise nur Limousinen, gefertigt werden soll, können die erste und zweite Handhabungseinrichtung 110, 120 den Fahrzeugmontagewerkzeugträger 300 auch nur Anheben und wieder Senken, ohne ihn zu drehen. Mit dem Anheben wird das Transportieren bzw. Fördern des Fahrzeuggrundkörpers 3 möglich.

Das erste als auch das zweite Fahrzeugmontagewerkzeugträger-Adapterelement 310, 320 kann auch an anderen Positionen als an der Mitte der zweiten Schmalseite des Grundrahmens 330 des Fahrzeugmontagewerkzeugträgers 300 angeordnet sein. Beispielsweise kann das erste Fahrzeugmontagewerkzeugträger-Adapterelement 310 an oder in Nähe der Ecke des Grundrahmens 330 angeordnet sein, die an der ersten Stützsäule 133 aufzulegen ist, wohingegen das zweite Fahrzeugmontagewerkzeugträger-Adapterelement 320 an oder in Nähe der Ecke des Grundrahmens 330 angeordnet sein kann, die an der vierten Stützsäule 136 aufzulegen ist. Für das erste als auch das zweite Fahrzeugmontagewerkzeugträger-Adapterelement 310, 320 sind auch andere Positionen an dem Grundrahmen 330 möglich. Hierbei ist es in Hinblick auf die Verteilung der Last des Fahrzeugmontagewerkzeugträgers 300 vorteilhaft, wenn das zweite Fahrzeugmontagewerkzeugträger-Adapterelement 320 dem ersten Fahrzeugmontagewerkzeugträger-Adapterelement 310 an dem Grundrahmen 330 jeweils gegenüberliegt.

Die Stützeinrichtung 130 ist vorzugsweise aus Stahl gefertigt. Die Stützeinrichtung 130 kann auch andere Abmessungen und Geometrien haben, solange auch damit ein Stützen des Fahrzeugmontagewerkzeugträgers 300 möglich ist.

Der Fahrzeugmontagewerkzeugträger 300 kann eine Gewichtskraft von beispielsweise ca. 900 kg haben. In einem solchen Fall ist es vorteilhaft, wenn die erste und zweite Handhabungseinrichtung 110, 120 jeweils etwa 500 kg tragen können.

## Patentansprüche

1. Vorrichtung (110, 120, 130), mit
einem Fahrzeugmontagewerkzeugträger (300) für eine Fahrzeugfertigungslinie (1),
einer ersten Handhabungseinrichtung (110) zur Handhabung des Fahrzeugmontagewerkzeugträgers (300), wobei der Fahrzeugmontagewerkzeugträger (300) mindestens zwei Tragflächen (300A, 300B) hat, die jeweils zum Tragen eines bei einer Montage eines Fahrzeugs (2) in der Fahrzeugfertigungslinie (1) zu verwendenden Fahrzeugmontagewerkzeugs (340, 360) ausgestaltet sind, und
einer zweiten Handhabungseinrichtung (120) zur Handhabung des Fahrzeugmontagewerkzeugträgers (300) gemeinsam mit der ersten Handhabungseinrichtung (120),
wobei die erste und zweite Handhabungseinrichtung (110, 120) zur gemeinsamen Handhabung des Fahrzeugmontagewerkzeugträgers (300) derart ausgestaltet sind, dass nach der Handhabung eine der mindestens zwei Tragflächen (300A, 300B) des Fahrzeugmontagewerkzeugträgers (300) an einer vorbestimmten Position (VP) angeordnet ist, an der sich zuvor eine andere der mindestens zwei Tragflächen (300A, 300B) befand.

2. Vorrichtung nach Anspruch 1, zudem mit einer Stützeinrichtung (130) zum Stützen des Fahrzeugmontagewerkzeugträgers (300) derart, dass mindestens eine der zwei Tragflächen (300A, 300B) des Fahrzeugmontagewerkzeugträgers (300) an der vorbestimmten Position (VP) angeordnet ist.

3. Vorrichtung nach einem der vorangehenden Ansprüche, wobei eine Handhabung des Fahrzeugmontagewerkzeugträgers (300) mittels der ersten und zweiten Handhabungseinrichtung (110, 120) umfasst, dass die erste und zweite Handhabungseinrichtung (110, 120) den an einer vorbestimmten Montagestation (110) angeordneten und in eine erste vorbestimmten Drehposition gedrehten Fahrzeugmontagewerkzeugträger (300) gemeinsam um ein vorbestimmtes Maß (M) anheben, den Fahrzeugmontagewerkzeugträger (300) aus der ersten vorbestimmten Drehposition (DP1) gemeinsam um eine Drehachse (D) in eine zweite vorbestimmte Drehposition (DP2) drehen und den Fahrzeugmontagewerkzeugträger (300) gemeinsam um das vorbestimmte Maß (M) absenken, um den Fahrzeugmontagewerkzeugträger (300), in die zweite vorbestimmte Drehposition (DP2) gedreht, wieder an der vorbestimmten Montagestation (100) anzuordnen.

4. Vorrichtung nach einem der vorangehenden Ansprüche, wobei die erste und zweite Handhabungseinrichtung (110, 120) derart ausgestaltet sind, dass sie sich bei einer Handhabung des Fahrzeugmontagewerkzeugträgers (300) die Gewichtskraft (G) des Fahrzeugmontagewerkzeugträgers (300) aufteilen.

5. Vorrichtung nach einem der vorangehenden Ansprüche, wobei die erste Handhabungseinrichtung (110) der zweiten Handhabungseinrichtung (120) steuerungsmäßig übergeordnet ist.

6. Vorrichtung nach einem der vorangehenden Ansprüche, wobei die erste Handhabungseinrichtung (110) und die zweite Handhabungseinrichtung (120) jeweils ein Handhabungseinrichtung-Adapterelement (116, 126) zum Zusammenwirken mit einem Fahrzeugmontagewerkzeugträger-Adapterelement (310, 320) des Fahrzeugmontagewerkzeugträgers (300) aufweisen.

7. Vorrichtung nach einem der vorangehenden Ansprüche, wobei die erste Handhabungseinrichtung (110) und/oder die zweite Handhabungseinrichtung (120) zudem derart ausgestaltet sind, dass sie zur Bearbeitung eines Fahrzeuggrundkörpers (3) verwendbar sind, aus dem das Fahrzeug (2) hergestellt wird.

8. Montagestation (100) für eine Fahrzeugfertigungslinie (1) zur Fertigung von Fahrzeugen (2), mit
einer Vorrichtung (110, 120, 130) nach einem der Ansprüche 1 bis 7, und
mindestens einem Fahrzeugmontagewerkzeugträger (300), der bei einer Montage eines Fahrzeugs (2) in der Fahrzeugfertigungslinie (1) einsetzbar ist.

9. Montagestation (100) nach Anspruch 8, wobei der Fahrzeugmontagewerkzeugträger (300) umfasst
einen Grundrahmen (330) mit mindestens zwei Tragflächen (300A, 300B), die jeweils zum Tragen eines bei der Montage eines Fahrzeugs (2) in der Fahrzeugfertigungslinie (1) zu verwendenden Fahrzeugmontagewerkzeugs (340, 360) ausgestaltet sind,
ein erstes Fahrzeugmontagewerkzeugträger-Adapterelement (310) zum Zusammenwirken mit einem Handhabungseinrichtung-Adapterelement (116) einer ersten Handhabungseinrichtung (110) einer Vorrichtung (110, 120, 130) zur Handhabung eines Fahrzeugmontagewerkzeugträgers (300) bei einer Fahrzeugfertigungslinie (1), und
ein zweites Fahrzeugmontagewerkzeugträger-Adapterelement (320) zum Zusammenwirken mit einem Handhabungseinrichtung-Adapterelement (126) einer zweiten Handhabungseinrichtung (120) einer Vorrichtung (110, 120, 130) zur Handhabung eines Fahrzeugmontagewerkzeugträgers (300) bei der Fahrzeugfertigungslinie (1),
wobei das zweite Fahrzeugmontagewerkzeugträger-Adapterelement (320) dem ersten Fahrzeugmontagewerkzeugträger-Adapterelement (310) an dem Grundrahmen (330) gegenüberliegt.

10. Montagestation (100) nach Anspruch 9, wobei an mindestens einer Tragfläche (330A, 330B) der mindestens zwei Tragflächen (330A, 330B) des Grundrahmens (330) als Fahrzeugmontagewerkzeug (340, 360) Spannelemente (250, 360) angeordnet sind zum Spannen eines Fahrzeugteils (4), insbesondere eines Fahrzeugdachs, in einen Fahrzeuggrundkörper (3), um das Fahrzeugteil (4) mit dem Fahrzeuggrundkörper (3) zu verbinden.

11. Montagestation (100) nach Anspruch 9 oder 10, wobei
der Grundrahmen (330) ein Rechteck bildet,
das erste Fahrzeugmontagewerkzeugträger-Adapterelement (310) an einer ersten Schmalseite des Rechtecks angeordnet ist, und
das zweite Fahrzeugmontagewerkzeugträger-Adapterelement (320) an einer zweiten Schmalseite des Rechtecks angeordnet ist, welche der ersten Schmalseite des Rechtecks gegenüberliegt.

12. Montagestation (100) nach Anspruch 9 oder 10, wobei
der Grundrahmen (330) ein Rechteck bildet,
das erste Fahrzeugmontagewerkzeugträger-Adapterelement (310) an einer ersten Ecke des Rechtecks angeordnet ist, und
das zweite Fahrzeugmontagewerkzeugträger-Adapterelement (320) an einer zweiten Ecke des Rechtecks angeordnet ist, welche der ersten Ecke des Rechtecks diagonal gegenüberliegt.

13. Montagestation (100) nach einem der Ansprüche 8 bis 12,
wobei die Montagestation (100) gegenüber zu fertigenden Fahrzeugen (2) feststehend angeordnet ist, die mittels einer Transporteinrichtung (200) der Fahrzeugfertigungslinie (1) entlang der Fahrzeugfertigungslinie (1) direkt nacheinander in einer Reihe transportiert werden.

14. Verfahren zum Handhaben eines Fahrzeugmontagewerkzeugträgers (300) bei einer Fahrzeugfertigungslinie (1), mit dem Schritt
gemeinsam Handhaben des Fahrzeugmontagewerkzeugträgers (300), der mindestens zwei Tragflächen (300A, 300B) hat, die jeweils zum Tragen eines bei einer Montage eines Fahrzeugs (2) in der Fahrzeugfertigungslinie (1) zu verwendenden Fahrzeugmontagewerkzeugs (340, 360) ausgestaltet sind, mittels einer ersten und zweiten Handhabungseinrichtung (110, 120),
wobei das gemeinsame Handhaben des Fahrzeugmontagewerkzeugträgers (300) umfasst, dass nach der Handhabung eine der mindestens zwei Tragflächen (300A, 300B) des Fahrzeugmontagewerkzeugträgers (300) an einer vorbestimmten Position (VP) angeordnet ist, an der sich zuvor eine andere der mindestens zwei Tragflächen (300A, 300B) befand.

15. Verfahren nach Anspruch 14,
wobei das gemeinsam Handhaben des Fahrzeugmontagewerkzeugträgers (300) mittels der ersten und zweiten Handhabungseinrichtung (110, 120) die Schritte umfasst:
gemeinsam Anheben des an einer vorbestimmten Montagestation (100) angeordneten und in eine erste vorbestimmten Drehposition (DP1) gedrehten Fahrzeugmontagewerkzeugträgers (300) um ein vorbestimmtes Maß (M) mit Hilfe der ersten und zweiten Handhabungseinrichtung (110, 120),
gemeinsam Drehen des Fahrzeugmontagewerkzeugträgers (300) aus der ersten vorbestimmten Drehposition (DP1) um eine Drehachse (D) in eine zweite vorbestimmte Drehposition (DP2), und
gemeinsam Absenken des Fahrzeugmontagewerkzeugträgers (300) um das vorbestimmte Maß (M), um den Fahrzeugmontagewerkzeugträger (300), in die zweite vorbestimmte Drehposition (VP2) gedreht, wieder an der vorbestimmten Montagestation (100) anzuordnen.

## Claims

1. A device (110, 120, 130), comprising
a vehicle mounting tool bearer (300) for a vehicle production line (1),
a first handling means (110) for handling the vehicle mounting tool bearer (300), wherein the vehicle mounting tool bearer (300) comprises at least two bearing planes (300A, 300B) each configured to bear a vehicle mounting tool (340,360) which is to be used when mounting a vehicle in the vehicle production line (1), and
a second handling means (120) for handling the vehicle mounting tool bearer (300) jointly with the first handling means (110),
wherein the first and second handling means (110, 120) are configured to jointly handle the vehicle mounting tool bearer (300) such that, after the handling, one of the at least two bearing planes (300A, 300B) of the vehicle mounting tool bearer (300) is arranged to a predetermined position (VP), to which another one of the at least two bearing planes (300A, 300B) was arranged before.

2. The device according to claim 1, further comprising support means (130) for supporting the vehicle mounting tool bearer (300) such that at least one of the two bearing planes (300A, 300B) of the vehicle mounting tool bearer (300) is arranged to the predetermined position (VP).

3. The device according to one of the preceding claims, wherein handling of the vehicle mounting tool bearer (300) by the use of the first and second handling means (110, 120) comprises that the first and second handling means (110, 120) jointly lift by a predetermined amount (M) the vehicle mounting tool bearer (300) arranged to a predetermined mounting station (110) and rotated in a first predetermined rotation position, jointly rotate the vehicle mounting tool bearer (300) from the first predetermined rotation position (DP1) around a rotation axis (D) in a second predetermined rotation position (DP2), and jointly lower the vehicle mounting tool bearer (300) by the predetermined amount (M) to arrange the vehicle mounting tool bearer (300), being rotated in the second predetermined rotation position (DP2), again to the predetermined mounting station (110).

4. The device according to one of the preceding claims, wherein the first and second handling means (110, 120) are configured such that they distribute among each other the weight (G) of the vehicle mounting tool bearer (300) when handling the vehicle mounting tool bearer (300).

5. The device according to one of the preceding claims, wherein the first handling means (110) is superior of the second handling means (120) as regards a control.

6. The device according to one of the preceding claims, wherein the first handling means (110) and the second handling means (120) each comprise a handling means adapter element (116, 126) for cooperating with a vehicle mounting tool bearer adapter element (310, 320) of the vehicle mounting tool bearer (300).

7. The device according to one of the preceding claims, wherein the the first handling means (110) and/or the second handling means (120) are configured such that they are usable for working a basic vehicle body (3) from which the vehicle (2) is produced.

8. A mounting station (100) for a vehicle production line (1) for producing vehicles (2), the mounting station (100) comprising
a device (110, 120, 130) according to one of the claims 1 to 7, and
at least one vehicle mounting tool bearer (300) usable in mounting a vehicle (2) in the vehicle production line (1).

9. The mounting station (100) according to claim 8, wherein the vehicle mounting tool bearer (300) comprises
a base frame (330) which comprises at least two bearing planes (300A, 300B) each configured to bear a vehicle mounting tool (340, 360) which is to be used when mounting a vehicle (2) in the vehicle production line (1),
a first vehicle mounting tool bearer adapter element (310) for cooperating with a handling means adapter element (116) of first handling means (110) of a device (110, 120, 130) for handling a vehicle mounting tool bearer (300) in a vehicle production line (1), and
a second vehicle mounting tool bearer adapter element (320) for cooperating with a handling means adapter element (126) of second handling means (120) of a device (110, 120, 130) for handling a vehicle mounting tool bearer (300) in the vehicle production line (1),
wherein the second vehicle mounting tool bearer adapter element (320) is arranged to the base frame (330) opposite to the first vehicle mounting tool bearer adapter element (310) .

10. The mounting station (100) according to claim 9, wherein clamping elements (250, 360) are arranged as vehicle mounting tool (340, 360) to at least one bearing plane (330A, 330B) of the at least two bearing planes (330A, 330B) of the base frame (330), said clamping elements (250, 360) being for clamping a vehicle part (4), in particular a vehicle roof, into a basic vehicle body (3), to join the vehicle part (4) with the basic vehicle body (3).

11. The mounting station (100) according to claim 9 or 10, wherein
the base frame (330) forms a rectangle,
the first vehicle mounting tool bearer adapter element (310) is arranged on a first narrow side of the rectangle, and
the second vehicle mounting tool bearer adapter element (320) is arranged on a second narrow side of the rectangle, said second narrow side being arranged opposite to the first narrow side of the rectangle.

12. The mounting station (100) according to claim 9 or 10, wherein
the base frame (330) forms a rectangle,
the first vehicle mounting tool bearer adapter element (310) is arranged to a first edge of the rectangle, and
the second vehicle mounting tool bearer adapter element (320) is arranged to a second edge of the rectangle, said second edge being arranged diagonally opposite to the first edge of the rectangle.

13. The mounting station (100) according to one of the claims 8 to 12,
wherein the mounting station (100) is arranged stationary compared with the vehicles (2) to be produced, said vehicles (2) being transported along the vehicle production line (1) one directly after another in a row by the use of transport means (200) of the vehicle production line (1).

14. Method for handling a vehicle mounting tool bearer (300) in a vehicle production line (1), the method comprising the step
jointly handling the vehicle mounting tool bearer (300) by the use of first and second handling means (110, 120), said vehicle mounting tool bearer (300) comprising at least two bearing planes (300A, 300B) each configured to bear a vehicle mounting tool (340,360) which is to be used when mounting a vehicle (2) in the vehicle production line (1),
wherein jointly handling the vehicle mounting tool bearer (300) comprises that, after the handling, one of the at least two bearing planes (300A, 300B) of the vehicle mounting tool bearer (300) is arranged to a predetermined position (VP), to which another one of the at least two bearing planes (300A, 300B) was arranged before.

15. Method according to claim 14,
wherein jointly handling the vehicle mounting tool bearer (300) by the use of first and second handling means (110, 120) comprises the steps of
jointly lifting by a predetermined amount (M) the vehicle mounting tool bearer (300) by the use of the first and second handling means (110, 120), said vehicle mounting tool bearer (300) being arranged to a predetermined mounting station (110) and rotated in a first predetermined rotation position (DP1),
jointly rotating the vehicle mounting tool bearer (300) from the first predetermined rotation position (DP1) around a rotation axis (D) in a second predetermined rotation position (DP2), and
jointly lowering the vehicle mounting tool bearer (300) by the predetermined amount (M) to arrange the vehicle mounting tool bearer (300), being rotated in the second predetermined rotation position (DP2), again to the predetermined mounting station (110).

## Revendications

1. Dispositif(110, 120, 130), comprenant
un porteur d'outil de montage de véhicule (300) pour une chaîne de production de véhicule (1),
un premier moyen de manipulation (110) pour manipuler le porteur d'outil de montage de véhicule (300), dans lequel le porteur d'outil de montage de véhicule (300) comprend au moins deux plans d'appui (300A, 300B) chacun configuré pour porter un outil de montage de véhicule (340, 360) qui doit être utilisé lors du montage d'un véhicule dans la chaîne de production de véhicule (1), et
un second moyen de manipulation (120) pour manipuler le porteur d'outil de montage de véhicule (300) conjointement avec le premier moyen de manipulation (110),
dans lequel les premier et second moyens de manipulation (110, 120) sont configurés pour manipuler conjointement le porteur d'outil de montage de véhicule (300) de sorte que, après la manipulation, un des au moins deux plans d'appui (300A, 300B) du porteur d'outil de montage de véhicule (300) soit agencé dans une position prédéterminée (VP), dans laquelle un autre des au moins deux plans d'appui (300A, 300B) était agencé auparavant.

2. Dispositif selon la revendication 1, comprenant en outre un moyen de support (130) pour supporter le porteur d'outil de montage de véhicule (300) de sorte qu'au moins un des deux plans d'appui (300A, 300B) du porteur d'outil de montage de véhicule (300) soit agencé dans la position prédéterminée (VP).

3. Dispositif selon une des revendications précédentes, dans lequel la manipulation du porteur d'outil de montage de véhicule (300) par l'utilisation des premier et second moyens de manipulation (110, 120) comprend le fait que les premier et second moyens de manipulation (110, 120) lèvent conjointement selon une quantité prédéterminée (M) le porteur d'outil de montage de véhicule (300) agencé sur un poste de montage prédéterminé (110) et tourné dans une première position de rotation prédéterminée, tournent conjointement le porteur d'outil de montage de véhicule (300) à partir de la première position de rotation prédéterminée (DP1) autour d'un axe de rotation (D) dans une seconde position de rotation prédéterminée (DP2), et abaissent conjointement le porteur d'outil de montage de véhicule (300) selon la quantité prédéterminée (M) pour agencer le porteur d'outil de montage de véhicule (300), tourné dans la seconde position de rotation prédéterminée (DP2), à nouveau sur le poste de montage prédéterminé (110).

4. Dispositif selon une des revendications précédentes, dans lequel les premier et second moyens de manipulation (110, 120) sont configurés de sorte qu'ils se distribuent parmi l'un l'autre le poids (G) du porteur d'outil de montage de véhicule (300) lors de la manipulation du porteur d'outil de montage de véhicule (300).

5. Dispositif selon une des revendications précédentes, dans lequel le premier moyen de manipulation (110) est supérieur par rapport au second moyen de manipulation (120) en ce qui concerne une commande.

6. Dispositif selon une des revendications précédentes, dans lequel le premier moyen de manipulation (110) et le second moyen de manipulation (120) comprennent chacun un élément adaptateur de moyen de manipulation (116, 126) pour coopérer avec un élément adaptateur de porteur d'outil de montage de véhicule (310, 320) du porteur d'outil de montage de véhicule (300).

7. Dispositif selon une des revendications précédentes, dans lequel le premier moyen de manipulation (110) et/ou le second moyen de manipulation (120) sont configurés de sorte qu'ils soient utilisables pour usiner une carrosserie de véhicule de base (3) à partir de laquelle le véhicule (2) est produit.

8. Poste de montage (100) pour une chaîne de production de véhicule (1) pour produire des véhicules (2), le poste de montage (100) comprenant
un dispositif (110, 120, 130) selon une des revendications 1 à 7, et
au moins un porteur d'outil de montage de véhicule (300) utilisable dans le montage d'un véhicule (2) dans la chaîne de production de véhicule (1).

9. Poste de montage (100) selon la revendication 8, dans lequel le porteur d'outil de montage de véhicule (300) comprend
un cadre de base (330) qui comprend au moins deux plans d'appui (300A, 300B) chacun configuré pour porter un outil de montage de véhicule (340, 360) qui doit être utilisé lors du montage d'un véhicule (2) dans la chaîne de production de véhicule (1),
un premier élément adaptateur de porteur d'outil de montage de véhicule (310) pour coopérer avec un élément adaptateur de moyen de manipulation (116) de premier moyen de manipulation (110) d'un dispositif (110, 120, 130) pour manipuler un porteur d'outil de montage de véhicule (300) dans une chaîne de production de véhicule (1), et
un second élément adaptateur de porteur d'outil de montage de véhicule (320) pour coopérer avec un élément adaptateur de moyen de manipulation (126) de second moyen de manipulation (120) d'un dispositif (110, 120, 130) pour manipuler un porteur d'outil de montage de véhicule (300) dans la chaîne de production de véhicule (1),
dans lequel le second élément adaptateur de porteur d'outil de montage de véhicule (320) est agencé sur le cadre de base (330) de façon opposée au premier élément adaptateur de porteur d'outil de montage de véhicule (310).

10. Poste de montage (100) selon la revendication 9, dans lequel des éléments de serrage (250, 360) sont agencés en tant qu'outil de montage de véhicule (340, 360) sur au moins un plan d'appui (330A, 330B) des au moins deux plans d'appui (330A, 330B) du cadre de base (330), lesdits éléments de serrage (250, 360) étant pour serrer une partie de véhicule (4), en particulier un toit de véhicule, dans une carrosserie de véhicule de base (3), pour joindre la partie de véhicule (4) avec la carrosserie de véhicule de base (3).

11. Poste de montage (100) selon la revendication 9 ou 10, dans lequel le cadre de base (330) forme un rectangle,
le premier élément adaptateur de porteur d'outil de montage de véhicule (310) est agencé sur un premier côté étroit du rectangle, et
le second élément adaptateur de porteur d'outil de montage de véhicule (320) est agencé sur un second côté étroit du rectangle, ledit second côté étroit étant agencé de façon opposée au premier côté étroit du rectangle.

12. Poste de montage (100) selon la revendication 9 ou 10, dans lequel le cadre de base (330) forme un rectangle,
le premier élément adaptateur de porteur d'outil de montage de véhicule (310) est agencé sur un premier bord du rectangle, et
le second élément adaptateur de porteur d'outil de montage de véhicule (320) est agencé sur un second bord du rectangle, ledit second bord étant agencé de façon diagonalement opposée au premier bord du rectangle.

13. Poste de montage (100) selon une des revendications 8 à 12,
dans lequel le poste de montage (100) est agencé de façon stationnaire par rapport aux véhicules (2) destinés à être produits, lesdits véhicules (2) étant transportés le long de la chaîne de production de véhicule (1) un directement après un autre dans une rangée par l'utilisation d'un moyen de transport (200) de la chaîne de production de véhicule (1).

14. Procédé pour manipuler un porteur d'outil de montage de véhicule (300) dans une chaîne de production de véhicule (1), le procédé comprenant l'étape de
la manipulation conjointe du porteur d'outil de montage de véhicule (300) par l'utilisation de premier et second moyens de manipulation (110, 120), ledit porteur d'outil de montage de véhicule (300) comprenant au moins deux plans d'appui (300A, 300B), chacun configuré pour porter un outil de montage de véhicule (340, 360) qui doit être utilisé lors du montage d'un véhicule (2) dans la chaîne de production de véhicule (1),
dans lequel la manipulation conjointe du porteur d'outil de montage de véhicule (300) comprend le fait que, après la manipulation, un des au moins deux plans d'appui (300A, 300B) du porteur d'outil de montage de véhicule (300) est agencé dans une position prédéterminée (VP), dans laquelle un autre des au moins deux plans d'appui (300A, 300B) était agencé auparavant.

15. Procédé selon la revendication 14,
dans lequel la manipulation conjointe du porteur d'outil de montage de véhicule (300) par l'utilisation de premier et second moyen de manipulation (110, 120) comprend les étapes de
le levage conjoint selon une quantité prédéterminée (M) du porteur d'outil de montage de véhicule (300) par l'utilisation des premier et second moyens de manipulation (110, 120), ledit porteur d'outil de montage de véhicule (300) étant agencé sur un poste de montage prédéterminé (110) et tourné dans une première position de rotation prédéterminée (DP1),
la rotation conjointe du porteur d'outil de montage de véhicule (300) à partir de la première position de rotation prédéterminée (DP1) autour d'un axe de rotation (D) dans une seconde position de rotation prédéterminée (DP2), et
l'abaissement conjoint du porteur d'outil de montage de véhicule (300) selon la quantité prédéterminée (M) pour agencer le porteur d'outil de montage de véhicule (300), tourné dans la seconde position de rotation prédéterminée (DP2), à nouveau sur le poste de montage prédéterminé (110).
